# EUROPEAN PATENT SPECIFICATION

(11) **EP 4 354 632 B1**
(45) Date of publication and mention of the grant of the patent: **12.08.2026**
(21) Application number: 22816490.1
(22) Date of filing: 03.06.2022
(51) Int. Cl.: H01M 50/505, H01M 50/503

(54) **BUSBAR FOR INCREASING ALLOWANCE CURRENT AND REDUCING HEATING VALUE, AND PRODUCTION METHOD THEREOF**
SAMMELSCHIENE ZUR ERHÖHUNG DES VERSORGUNGSSTROMS UND ZUR REDUZIERUNG DES HEIZWERTES SOWIE HERSTELLUNGSVERFAHREN DAFÜR
BARRE OMNIBUS POUR AUGMENTATION DE COURANT D'AUTORISATION ET RÉDUCTION DE LA VALEUR DE CHAUFFAGE, ET SON PROCÉDÉ DE PRODUCTION

(30) Priority: 03.06.2021 KR 20210072193
(43) Date of publication of application: 17.04.2024
(73) Proprietor: LG Energy Solution, Ltd., Seoul 07335 (KR)
(72) Inventor: YOON, Seog Jin, Daejeon 34122 (KR)
(74) Representative: Plasseraud IP
(86) International application number: PCT/KR2022/007893
(87) International publication number: WO 2022/255831

(56) References cited:
- CN-U- 212 783 700
- JP-A- 2017 016 856
- KR-A- 20140 046 337
- KR-A- 20160 137 257
- KR-A- 20180 074 592
- US-A1- 2016 049 629
- US-A1- 2016 056 514
- US-A1- 2017 005 313
- US-A1- 2017 338 002

## Description

### TECHNICAL FIELD

The present invention relates to a current busbar, and more particularly, provides a busbar in which an allowable current is increased and a generated heat amount is reduced at the same time.

### BACKGROUND ART

A busbar is a generic term for a rod-shaped conductive product that transmits electrical energy that can be used instead of a cable. Because a busbar can deliver more electrical energy in the same volume compared to conventional cables, in configuring the battery pack, the busbar is used for the connection between battery cells, modules or external terminals of the battery pack in the field of electric field that requires various capacities of energy or high current such as light electric vehicle (LEV), uninterruptible power supply (UPS), unmanned vehicle (AGV), electric vehicle (EV), and the like.

In such a busbar, the maximum current that can safely flow is determined according to the size and material including the length and cross-sectional area, and this is called the allowable current. When a current flows in the busbar, joule heat is generated, and when the current flows beyond the allowable current, there is a problem of causing strength or carbonization of insulation due to temperature rise.

In fields that require high capacity energy or current, a busbar with high allowable current is required, and for this, an increase in size is inevitable, but the space inside the battery pack is limited, and therefore, the conventional busbar does not satisfy the required allowable current or solve the problem of heat generation due to temperature rise.

Therefore, if it is impossible to increase the size of the busbar due to the limitation of the internal design space of the battery pack, there is a need for a busbar that can reduce the amount of generated heat and increase the allowable current while maintaining the space of the busbar occupying the battery pack.

The technology underlying the present invention is disclosed in the following patent documents.
(Patent Document 1) KR 2014-0046337 A
(Patent Document 2) JP 5783465 B2
(Patent Document 3) CN 206976034 U
(Patent Document 4) KR 2019-0096674 A

US 2017/005313 and US 2017/338002. and US 2016/049629

### DISCLOSURE OF THE INVENTION

### TECHNICAL PROBLEM

An object of the present invention is to provide a busbar having the effect of increasing the allowable current while reducing the amount of generated heat for cases where it is not possible to increase the size of the busbar due to the limitation of the internal space of the battery pack.

### TECHNICAL SOLUTION

The invention is defined in the set of claims. A busbar is provided, it is capable of increasing an allowable current while reducing the amount of generated heat by including a current groove in the busbar.

More specifically, in a busbar according to an embodiment of the present invention, the busbar includes a conductive busbar body and at least one current groove on at least one surface of the conductive body, wherein the at least one current groove includes sidewall parts on both sides of a groove, and a bottom part of a lower part, wherein a number of the current grooves, a depth of the sidewall part, and a width of the bottom part are set to increase a surface area of the entire busbar, wherein the width of the bottom part is smaller than the depth of the sidewall part, and the current grooves on the upper surface and the current grooves on the lower surface are arranged to be positioned alternately, wherein a number of the current grooves, a depth of the sidewall part, and a width of the bottom part are set so that an allowable current of the busbar is increased by 1% or more and a generated heat amount is reduced by 2% or more at the same time compared to a case where the current groove is not formed.

In a busbar according to the embodiment of the present invention, the busbar includes: a base busbar made of a conductive body; and at least four current sticks attached to an upper and lower surface of the base busbar at a predetermined interval, wherein the at least two or more current sticks form a current groove between adjacent other current sticks, wherein the current stick is a separate member bonded to the base busbar to form the current groove, wherein the current groove includes a sidewall part formed by a thickness of the current stick; and a bottom part formed by an interval between the current sticks, wherein a number of the current grooves, a depth of the sidewall part, and a width of the bottom part are set to increase a surface area of the entire busbar, wherein the width of the bottom part is smaller than the depth of the sidewall part.

A width and thickness of the busbar are formed of 25 mm and 4 mm.

The number of the current grooves is three, and the depth of the sidewall part and the width of the bottom part of the current groove are 2 mm and 2 mm, respectively, and it is characterized in that the allowable current of the busbar is increased by 1% or more and the generated heat amount is reduced by 2% or more compared to the case where the current groove is not formed.

The number of the current grooves is 5, and the depth of the sidewall part and the width of the bottom part of the current groove are 2 mm and 1 mm, respectively, and it is characterized in that the allowable current of the busbar is increased by 5% or more and the generated heat amount is reduced by 10% or more compared to the case where the current groove is not formed.

The number of the current grooves is 6, and the depth of the sidewall part and the width of the bottom part of the current groove are 2 mm and 1 mm, respectively, and it is characterized in that it is set so that the allowable current of the busbar is increased by 10% or more and the generated heat amount is reduced by 15% or more compared to the case where the current groove is not formed.

The temperature change of the busbar is determined by Equation 1 below, and the allowable current of the busbar is determined by Equation 2 below. $\left(θ-{θ}_{n}\right) = \frac{1}{\left\{{S}^{0.5 / 0.61}\times {P}^{0.39 / 0.61}\right\}}$ $I = {S}^{0.5} \times {P}^{0.39}$ wherein in Equation 1 or 2, (*θ* - *θₙ*) is a temperature change value (°C), S is a cross-sectional area of the busbar, and P is a circumference of the surface of the busbar cross-section.

### ADVANTAGEOUS EFFECTS

According to an embodiment of the present invention, the busbar can reduce the generated heat amount compared to the same current by increasing the surface area by configuring the current groove, and also has the effect of increasing the allowable current based on the same generated heat amount.

### BRIEF DESCRIPTION OF THE DRAWINGS

FIG. 1 is a perspective view of a prior art busbar.
FIG. 2 is a view showing a cross-section of a busbar including a current groove in the first aspect of the present invention.
FIG. 3 is a view showing a cross-section of a busbar including a current groove according to a second aspect of the present invention.

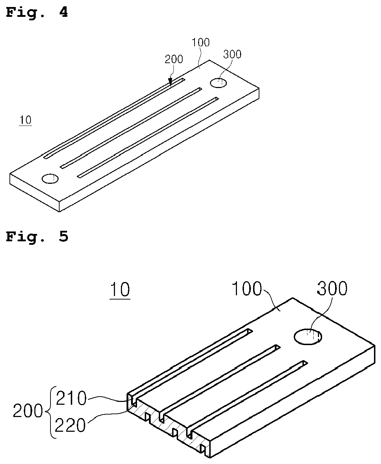

FIG. 4 is a perspective view of a busbar including a current groove of the present invention.
FIG. 5 is a view showing a cross-section of a busbar according to an embodiment in which current grooves are formed on both sides of the busbar in the first aspect of the present invention.

### MODE FOR CARRYING OUT THE INVENTION

Hereinafter, with reference to the accompanying drawings, an embodiment of the present invention will be described in detail. However, the present invention is not limited to the embodiments disclosed below, and will be implemented in various different forms. Only the embodiments of the present invention are provided to complete the disclosure of the present invention, and to completely inform those of ordinary skill in the art the scope of the invention. In order to explain the embodiment of the present invention, the drawings may be exaggerated, parts irrelevant to the description may be omitted from the drawings, and the same reference numerals in the drawings refer to the same elements.

Hereinafter, embodiments of the present invention will be described with reference to the drawings.

### 1. Allowable Current of Prior Art Busbar

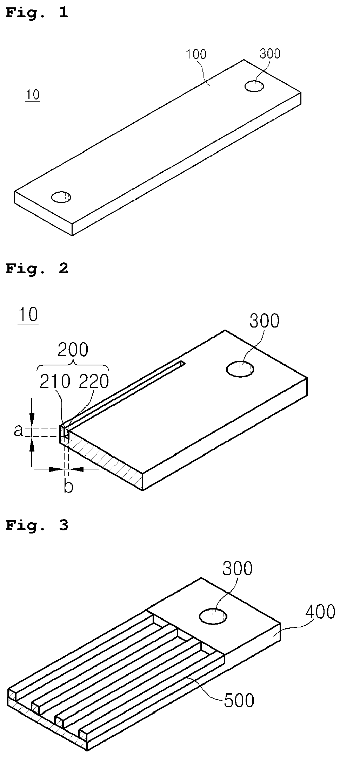

Referring to FIG. 1, the conventional busbar is made of a metal material and is formed in a shape of a conductive plate , and a coupling groove capable of coupling to terminals of a battery cell, a module, and a pack may be configured together.

The maximum allowable current capacity of the busbar is determined by the size or material including the length and cross-sectional area. Therefore, the width and thickness of the cross-section may be set to have a predetermined cross-sectional area in order to flow a large current to the busbar, but may be limited according to the space inside the battery pack.

Similarly, as the cross-sectional area of the busbar increases, the resistance decreases and the generated heat amount is reduced, but the size of the cross-sectional area is limited according to the space inside the battery pack.

Based on the width and thickness of the busbar being 25 mm and 4 mm, respectively, the allowable current of the busbar is calculated based on the Melson & Both equation of Equation 1 below. $I = k \times \left\{\frac{24.9 {\left(θ-{θ}_{n}\right)}^{0.61} \times {S}^{0.5} \times {P}^{0.39}}{\sqrt{{ρ}_{20} \left(1+α\left(θ-20\right)\right)}}\right\}$

where I is the current capacity, S is the cross-sectional area of the conductor, P is the circumference of the conductor, *θₙ* is the ambient temperature (*θₙ* ≤ 40°C), (*θ* - *θₙ*) is the allowable temperature rise or change value (°C), α is the temperature coefficient of resistance when the ambient temperature is exceeded, and *ρ*₂₀ is the resistivity of the conductor at ambient temperature.

Table 1 below shows the temperature change and allowable current calculation values of the prior art busbar that does not include a current groove.

**[Table 1]**

| Temperature change and allowable current of prior art busbar | | | | | | | | | |
|---|---|---|---|---|---|---|---|---|---|
| Classif ication | Width (mm) | Thick ness (mm) | Cross-sectio nal area (mm²) | Sect ion circ umfe renc e (mm) | Temperature change calculation | | Tempe ratur e chang e ratio (%) | Allow able curre nt calcu latio n | Curre nt chang e ratio (%) |
| Prior art | 25 | 4 | 100 | 58 | 584 | 0.00171 1 | - | 49 | - |

### 2. Configuration of Busbar of Present Invention

The present invention is an invention in which a plurality of current grooves 200 are configured in a conductive busbar body 100, and in order to simply calculate the temperature change rate and current change, which is different from the busbar of the prior art in which the current groove is not formed, by omitting the coefficient of Equation 1, the temperature change and allowable current can be calculated by the following Equations 2 and 3, which are expressed only by the cross-sectional area (S) and the circumferential length (P) of the cross-section. $\left(θ-{θ}_{n}\right) = \frac{1}{\left\{{S}^{0.5 / 0.61}\times {P}^{0.39 / 0.61}\right\}}$ $I = {S}^{0.5} \times {P}^{0.39}$ wherein in Equation 2 or 3 above, (*θ* - *θₙ*) is a temperature change value (°C), S is a cross-sectional area of the busbar, and P is a circumference of the surface of the busbar cross-section.

In the busbar 10 of the present invention, the size of the busbar 10 may be limited due to the lack of space that the busbar 10 can occupy in the battery pack of the prior art busbar 10, and therefore, the allowable current of the busbar 10 is limited or the problem that the generated heat amount cannot be reduced is solved.

A first aspect of the present invention will be described with reference to FIG. 2.

Referring to FIG. 2, the busbar 10 of the present invention constitutes at least one current groove 200 on one surface of the conductive busbar body 100. When two or more current grooves 200 are formed, each current groove 200 may be separately disposed on the upper surface, lower surface or side surface of the conductive body. In addition, when two or more current grooves 200 are formed, they may all be formed on one surface of the conductive body, and in this case, each current groove 200 is configured to be spaced apart from each other by a predetermined distance.

The current groove 200 is formed on an upper and lower surface of the conductive busbar body 100, and the shape of the formed current groove 200 may be formed in various shapes, such as a square, a triangle, or a semicircle, and in an embodiment of the present invention, as a current groove 200 formed in a square shape, it will be described as a current groove 200 composed of side wall portions 210 on both sides and a bottom portion 220 on the lower surface.

FIG. 2 shows a sidewall part 210 having a predetermined depth a and a bottom part 220 having a predetermined width b.

The sidewall part 210 and the bottom part 220 of the current groove 200 in Table 2 below show the number of current grooves 200 according to the embodiment of the present invention, the cross-sectional area of the busbar, the surface perimeter of the cross-section, a temperature change, a temperature change rate, an allowable current, and a current change rate according to the depth a of the sidewall part 210 and the width (b) of the bottom part 220. Embodiments 1, 2, 7, and 8 are not according to the invention because the width of the bottom part is not smaller than the depth of the sidewall part.

**[Table 2]**

| Classification (a mm × b mm), number of current grooves | Width (mm ) | Thic kness (mm) | Cross-sectio nal area (mm²) | Section circumference (mm) | Temperature change calculation value | | Temperature change ratio (%) | Allowable current calculation | Current change ratio (%) |
|---|---|---|---|---|---|---|---|---|---|
| Prior art | 25 | 4 | 100 | 58 | 584 | 0.00171 1 | 100 | 49 | 100 |
| Embodiment 1 (2 × 2), 3ea | 25 | 4 | 88 | 70 | 594 | 0.00168 5 | 98 | 49 | 101 |
| Embodiment 2 (2 × 2), 5ea | 25 | 4 | 80 | 78 | 588 | 0.00170 0 | 99 | 49 | 100 |
| Embodiment 3 (2 × 1), 3ea | 25 | 4 | 94 | 70 | 627 | 0.00159 6 | 93 | 51 | 104 |
| Embodiment 4 (2 × 1), 5ea | 25 | 4 | 90 | 78 | 648 | 0.00154 3 | 90 | 52 | 106 |
| Embodiment 5 (2 × 1), 6ea | 25 | 4 | 88 | 88 | 687 | 0.00145 5 | 85 | 54 | 110 |
| Embodiment 6 (2 × 1), 10ea | 25 | 4 | 80 | 98 | 681 | 0.00146 9 | 86 | 53 | 110 |

In the table, the first column of the calculated temperature change column is the value calculated by Equation 2, and the second column is the inverse.

The values of the temperature change ratio (%) column are the ratio of the temperature change value compared to the prior art in each embodiment when the temperature change value of the busbar 10 of the prior art is 100.

The values of the current change ratio (%) column are ratios of allowable current values compared to the prior art in each embodiment when the allowable current value of the busbar 10 of the prior art is 100.

A second aspect of the present invention will be described with reference to FIG. 3.

Referring to FIG. 3, the busbar 10 of the present invention is composed of a base busbar 400 made of one conductive material, and a current stick 500 made of at least one conductive material attached to one surface of the base busbar 400, and when two or more current sticks 500 are attached, the busbars 10 are attached at a predetermined interval.

The base busbar 400 may be formed in various shapes, and as in the first aspect of the present invention, the base busbar 400 is configured to have a predetermined length and cross-sectional area, but the width and thickness of the section are set according to the change in heating temperature and allowable current required by the user.

The current stick 500 may also be formed in various shapes, such as a polygon or a semicircle including a square, a triangle, and the like, and in an embodiment of the present invention, as a current stick 500 having a rectangular cross-section, the horizontal and vertical lengths and the predetermined intervals spaced apart of each current stick 500 are set according to the change in heating temperature and allowable current required by the user.

Embodiments 1 to 6 below describe the first aspect of the present invention, and embodiments 7 to 12 describe the second aspect.

### A. Reference Embodiment 1

When three current grooves 200 having a depth a of the sidewall part 210 and a width b of the bottom part 220 of 2 mm × 2 mm, respectively, are formed on one or both sides of the busbar 10, the temperature change and allowable current can be calculated through Equations 2 and 3 above. By configuring the current groove 200 in the busbar 10, the cross-sectional area is reduced, but the cross-sectional circumference is increased such that the temperature change rate is reduced to 98% compared to the prior art, and the allowable current is increased to 101%.

### B. Reference Embodiment 2

When five current grooves 200 having a depth a of the sidewall part 210 and a width b of the bottom part 220 of 2 mm × 2 mm, respectively, are formed on one side or both sides of the busbar 10, the temperature change rate is reduced to 99%, and the allowable current is 100%, so it can be confirmed that the effect of forming the current groove 200 is less than that of Embodiment 1.

### C. Embodiment 3

When three current grooves 200 having a depth a of the sidewall part 210 and a width b of the bottom part 220 of 2 mm × 1 mm, respectively, are formed on one or both sides of the busbar 10, the temperature change rate is reduced to 93%, and the allowable current is increased to 104%. When compared with Embodiment 1 having the same number of current grooves 200, in Embodiment 3, since the size of the bottom part 220 of the current groove 200 is formed smaller, the size of the lost cross-sectional area is smaller, so it can be confirmed that the formation effect of the current groove 200 is greater. Therefore, it is advantageous to form the current groove 200 with a smaller size of the bottom part 220 than the sidewall part 210.

### D. Embodiment 4

Based on the results of Embodiment 3, five current grooves 200 having a depth a of the sidewall part 210 and a width b of the bottom part 220 of 2 mm × 1 mm, respectively, are formed on one or both sides of the busbar 10. The temperature change rate decreases to 90%, and the allowable current increases to 106%. Compared to Embodiment 3, the cross-sectional area is reduced by forming a lot of current grooves 200, but it can be seen that the effect of forming the current groove 200 is greatly increased by increasing the length of the perimeter of the surface of the cross section.

### E. Embodiment 5

Based on the results of Embodiments 3 to 4, six current grooves 200 having a depth a of the sidewall part 210 and a width b of the bottom part 220 of 2 mm × 1 mm, respectively, are formed on one or both sides of the busbar 10. The temperature change rate decreases to 85%, and the allowable current increases to 110%. As can be seen from the results of Embodiments 3 to 4, the cross-sectional area is greatly reduced by forming a lot of current grooves 200, but it can be seen that the effect of forming the current groove 200 is greatly increased by increasing the length of the perimeter of the surface of the cross section.

### F. Embodiment 6

When ten current grooves 200 having a depth a of the sidewall part 210 and a width b of the bottom part 220 of 2 mm × 1 mm, respectively, are formed on one or both sides of the busbar 10, the temperature change rate is reduced to 86%, and the allowable current is increased to 110%. In the case of Embodiments 3 to 5, as the surface perimeter of the cross-section increases as the cross-sectional area decreases, the temperature change can be greatly reduced and the current change rate can also increase, but depending on the size and number of the current grooves 200, the reduction of the cross-sectional area has a greater effect than the increase of the surface circumference of the cross-section of the busbar 10 so that it can be seen that the effect of forming the current groove 200 is reduced.

Embodiment 7 to 12 are examples specifically applied to the thickness of the base busbar 400 and the width and thickness of the current stick 500 in the second aspect of the present invention. Embodiments 7 to 12 are embodiments according to the second aspect of the present invention using the current stick 500 shown in FIG. 3 and the related description, and the width and thickness of the base busbar 400, the width and thickness of the current stick 500, and the interval at which the current stick 500 is spaced apart are set so as to correspond to Embodiments 1 to 6 according to the first aspect of the present invention. Therefore, the width and thickness of the busbar of the second aspect are the width and thickness of the busbar 10 including the base busbar and the current stick 500.

### G. Reference Embodiment 7

As in Embodiment 1, in order to configure Embodiment 7 so that the current groove 200 having a depth a of the sidewall part 210 and a width b of the bottom part 220 of 2 mm × 2 mm, respectively, has the same effect as the three formed on the upper surface of the busbar body 100, for example, first, the width and thickness of the base busbar 400 are formed to be 25 mm and 2 mm, respectively. In addition, the thickness of the current stick 500 is set to 2mm so that the sum with the thickness of the base busbar 400 is 4 mm. A total of four current sticks 500 are attached to the upper surface of the base busbar 400, and two of them must be arranged in line with both end lines of the base busbar 400. The sum of the widths of each current stick 500 should be set to be 19 (=25-6) mm, and for example, in order to have the four current sticks 500 have the same width, the width of each current stick 500 may be set to 4.75 mm.

### H. Reference Embodiment 8

As in Embodiment 2, in order to configure Embodiment 8 so that the current grooves 200 having a depth a of the sidewall part 210 and a width b of the bottom part 220 of 2 mm × 2 mm, respectively, have the same effect as the five formed on the upper surface of the busbar body 100, for example, first, the width and thickness of the base busbar 400 are formed to be 25 mm and 2 mm, respectively. In addition, the thickness of the current stick 500 is set to 2 mm so that the sum with the thickness of the base busbar 400 is 4 mm, and a total of six current sticks 500 are attached to the upper surface of the base busbar 400, and two of them must be arranged in line with both end lines of the base busbar 400. The sum of the widths of each current stick 500 should be set to be 15 (=25-10) mm, and for example, in order to have the six current sticks 500 have the same width, the width of each current stick 500 may be set to 2.5 mm.

### I. Embodiment 9

As in Embodiment 3, in order to configure Embodiment 9 so that the current groove 200 having a depth a of the sidewall part 210 and a width b of the bottom part 220 of 2 mm × 1 mm, respectively, has the same effect as the three formed on the upper surface of the busbar body 100, for example, first, the width and thickness of the base busbar 400 are formed to be 25 mm and 2 mm, respectively. In addition, the thickness of the current stick 500 is set to 2 mm so that the sum with the thickness of the base busbar 400 is 4 mm, and a total of four current sticks 500 are attached to the upper surface of the base busbar 400, and two of them must be arranged in line with both end lines of the base busbar 400. The sum of the widths of each current stick 500 should be set to be 22 (=25-3) mm, and for example, in order to have the four current sticks 500 have the same width, the width of each current stick 500 may be set to 5.5 mm.

### J. Embodiment 10

As in Embodiment 4, in order to configure Embodiment 10 so that the current grooves 200 having a depth a of the sidewall part 210 and a width b of the bottom part 220 of 2 mm × 1 mm, respectively, have the same effect as the five formed on the upper surface of the busbar body 100, for example, first, the width and thickness of the base busbar 400 are formed to be 25 mm and 2 mm, respectively. In addition, the thickness of the current stick 500 is set to 2 mm so that the sum with the thickness of the base busbar 400 is 4 mm, and a total of six current sticks 500 are attached to the upper surface of the base busbar 400, and two of them must be arranged in line with both end lines of the base busbar 400. The sum of the widths of each current stick 500 should be set to be 20 (=25-5) mm, and for example, in order for the six current sticks 500 to have the same width, the width of each current stick 500 may be set to about 3.3 mm, but in this case, the width of each of two current sticks 500 is formed to be 3 mm, and the width of each of four current sticks 500 is formed to be 3.5 mm, and each of them can be replaced by arranging each spaced apart 1 mm apart.

### K. Embodiment 11

As in Embodiment 5, in order to configure Embodiment 11 so that the current grooves 200 having a depth a of the sidewall part 210 and a width b of the bottom part 220 of 2 mm × 1 mm, respectively, have the same effect as the six formed on the upper surface of the busbar body 100, for example, first, the width and thickness of the base busbar 400 are formed to be 25 mm and 2 mm, respectively. In addition, the thickness of the current stick 500 is set to 2 mm so that the sum with the thickness of the base busbar 400 is 4 mm, and a total of seve n current sticks 500 are attached to the upper surface of the base busbar 400, and two of them must be arranged in line with both end lines of the base busbar 400. The sum of the widths of each current stick 500 should be set to be 19 (=25-6) mm, and for example, in order for the seven current sticks 500 to have the same width, the width of each current stick 500 may be set to about 2.6 mm, but in this case, the width of each of two current sticks 500 is formed to be 2.5 mm, and the width of each of five current sticks 500 is formed to be 2.8 mm, and each of them can be replaced by arranging each spaced apart 2 mm apart.

### L. Embodiment 12

As in Embodiment 6, in order to configure Embodiment 12 so that the current grooves 200 having a depth a of the sidewall part 210 and a width b of the bottom part 220 of 2 mm × 1 mm, respectively, have the same effect as the ten formed on the upper surface of the busbar body 100, for example, first, the width and thickness of the base busbar 400 are formed to be 25 mm and 2 mm, respectively. In addition, the thickness of the current stick 500 is set to 2 mm so that the sum with the base busbar 400 is 4 mm, and a total of eleven current sticks 500 are attached to the upper surface of the base busbar 400, and two of them must be arranged in line with both end lines of the base busbar 400. The sum of the widths of each current stick 500 should be set to be 15 (=25-10) mm, and for example, in order for the eleven current sticks 500 to have the same width, the width of each current stick 500 may be set to about 1.5 mm, but in this case, the width of each of ten current sticks 500 is formed to be 1.4 mm, and the width of one current stick 500 is formed to be 1 mm, or the width of each of ten current sticks 500 is formed to be 1.3 mm, and the width of one current stick 500 is formed to be 2 mm, and each of them can be replaced by arranging each spaced apart 2 mm apart.

The configuration of the busbar according to the first aspect of the present invention describes the effect of forming the current groove 200 when the cross-sectional area is reduced by configuring the current groove 200 in the busbar body 100 but the length of the perimeter of the surface of the cross-section is increased. In this way, in a case where a plurality of formed current grooves 200 are respectively formed on the upper and lower surfaces of the busbar body 100, when the sum of the depth a of the sidewall part 210 of each current groove 200 is formed smaller than the total thickness of the busbar body 100, for example, the thickness of the busbar body 100 is 4 mm and the sum of the depth a of each current groove 200 sidewall part 210 located on the upper and lower surfaces is less than 4 mm, the upper and lower current grooves 200 face each other and may be positioned side by side or alternately positioned. On the other hand, when the sum of the depths of the sidewall parts 210 of each current groove 200 located on the upper and lower surfaces is formed over the entire thickness of the busbar body 100, for example, the thickness of the busbar body 100 is 4 mm and the sum of the depth a of the sidewall part 210 of the current groove 200 located on the upper and lower surfaces is 4 mm or more, the upper and lower current grooves 200 are alternately positioned.

In addition, the configuration of the busbar according to the second aspect of the present invention may replace the current groove 200 of the busbar according to the first aspect at a predetermined interval formed by each current stick 500 by attaching the current stick 500 having a predetermined thickness and width to the base busbar 400. In the above embodiments 7 to 12, the structure in which the current stick 500 is attached only to the upper surface of the base busbar 400 has been described, but by adjusting the thickness of the current stick 500 and the thickness of the base busbar 400 according to the temperature change and allowable current that the user wants to use, the current stick 500 may be attached to each of the upper and lower surfaces of the base busbar 400.

### 2. Manufacturing Method of Present Invention Busbar

A. Method for Manufacturing Busbar According to First Aspect of Present Invention
   (1) In the method of manufacturing a busbar according to the first aspect of the present invention, a conductive busbar body 100 is provided based on a prior art busbar, and a current groove 200 is formed in the busbar body 100. As a method of forming the current groove 200, there are a physical method of applying a laser or pressure to the position of the current groove 200 to be formed of the busbar body 100, a chemical method using etching, or a method using a mold or a mold casting, a method is only selectively used according to the size and material of the busbar body 100 or the size of the current groove 200, and the specific method is not limited.
B. Method for Manufacturing Busbar According to Second Aspect of Present Invention
   (1) In the method of manufacturing a busbar according to the second aspect of the present invention, a current stick 500 of a conductive material having a predetermined width, thickness and length is bonded to the base busbar 400 having a smaller thickness than that of the prior art busbar at predetermined intervals. As the bonding method, there may be methods such as compression, attachment, and growth, but only selectively used according to the size and material of the base busbar 400 and the current stick 500, and the specific method is not limited.

A predetermined interval for bonding the current stick 500 forms the current groove 200 described above, and constitutes the width b of the bottom part 220 of the current groove 200.

In this way, the base busbar 400 and the current stick 500 connected thereto together constitute the busbar 10.

The above embodiments of the present invention are intended to illustrate the present invention, not to limit the present invention. It should be noted that the configurations and methods disclosed in the above embodiments of the present invention may be combined and modified in various forms by combining or intersecting with each other, and modifications thereof may also be considered within the scope of the present invention. That is, the present invention is as defined in the appended claims.

## Claims

1. A busbar (10) constituting a battery pack, the busbar comprising:
a conductive busbar body (100) and
a plurality of current groove (200) provided on an upper surface and a lower surface of the conductive busbar body (100),
wherein each current groove (200) comprises:
sidewall parts (210) on both sides of a groove; and
a bottom part (220) of a lower part,
wherein a number of the current grooves (200), a depth of the sidewall part (210), and a width of the bottom part (220) are set to increase a surface area of the entire busbar (10), wherein the width of the bottom part (220) is smaller than the depth of the sidewall part (210), and the current grooves (200) on the upper surface and the current grooves (200) on the lower surface are arranged to be positioned alternately, wherein a number of the current grooves (200), a depth of the sidewall part (210), and a width of the bottom part (220) are set so that an allowable current of the busbar is increased by 1% or more and a generated heat amount is reduced by 2% or more at the same time compared to a case where the current groove is not formed.

2. A busbar (10) constituting a battery pack, the busbar comprising:
a base busbar (400) made of a conductive body; and
at least four current sticks (500) attached to an upper and lower surface of the base busbar (400) at a predetermined interval,
wherein the at least two or more current sticks (500) form a current groove between adjacent other current sticks (500),
wherein the current stick (500) is a separate member bonded to the base busbar (400) to form the current groove,
wherein the current groove comprises:
a sidewall part (210) formed by a thickness of the current stick (500); and
a bottom part (220) formed by an interval between the current sticks (500),
wherein a number of the current grooves, a depth of the sidewall part (210), and a width of the bottom part (220) are set to increase a surface area of the entire busbar, wherein the width of the bottom part (220) is smaller than the depth of the sidewall part (210).

3. The busbar of claim 1 or 2, wherein a width and thickness of the busbar (10) are formed of 25 mm and 4 mm.

4. The busbar of claim 1, wherein a number of the current grooves (200), a depth of the sidewall part (210), and a width of the bottom part (220) are set so that an allowable current of the busbar is increased by 5% or more and a generated heat amount is reduced by 10% or more at the same time compared to a case where the current groove is not formed.

5. The busbar of claim 1, wherein a number of the current grooves (200), a depth of the sidewall part (210), and a width of the bottom part (220) are set so that an allowable current of the busbar is increased by 10% or more and a generated heat amount is reduced by 15% or more at the same time compared to a case where the current groove is not formed.

6. The busbar of any one of claims 3 to 5, wherein a temperature change of the busbar (10) is determined by Equation 1 below,
wherein an allowable current of the busbar (10) is determined by Equation 2 below. $\left(θ-{θ}_{n}\right) = \frac{1}{\left\{{S}^{0.5 / 0.61}\times {P}^{0.39 / 0.61}\right\}}$ $I = {S}^{0.5} \times {P}^{0.39}$
wherein in Equation 1 or 2, (*θ* - *θₙ*) is a temperature change value (°C), S is a cross-sectional area of the busbar, and P is a circumference of the surface of the busbar cross-section.

7. The busbar of claim 4, wherein a number of the current groove (200) is five,
wherein a depth of the sidewall part (210) and a width of the bottom part (220) of the current groove are 2 mm and 1 mm, respectively.

8. The busbar of claim 5, wherein a number of the current groove (200) is six,
wherein a depth of the sidewall part (210) and a width of the bottom part (220) of the current groove are 2 mm and 1 mm, respectively.

9. A manufacturing method of a busbar constituting a battery pack according to claim 1, the method comprising:
providing a conductive busbar body having a predetermined width and thickness; and
forming at least one current groove on at least one surface of the conductive busbar body.

10. A manufacturing method of a busbar constituting a battery pack according to claim 2, the method comprising:
providing a base busbar having a predetermined width and thickness;
providing a current stick having a predetermined width and thickness; and
forming a current groove by bonding the current stick to the upper and lower surfaces of the base busbar at a predetermined interval.

## Patentansprüche

1. Sammelschiene (10), die einen Batteriepack bildet, wobei die Sammelschiene umfasst:
einen leitfähigen Sammelschienenkörper (100) und
eine Vielzahl von Stromnuten (200), die auf einer oberen Oberfläche und einer unteren Oberfläche des leitfähigen Sammelschienenkörpers (100) vorgesehen sind,
wobei jede Stromnut (200) umfasst:
Seitenwandteile (210) auf beiden Seiten einer Nut; und
einen Bodenteil (220) eines unteren Teils,
wobei eine Anzahl der Stromnuten (200), eine Tiefe des Seitenwandteils (210) und eine Breite des Bodenteils (220) so eingestellt sind, dass ein Oberflächenbereich der gesamten Sammelschiene (10) vergrößert wird, wobei die Breite des Bodenteils (220) kleiner ist als die Tiefe des Seitenwandteils (210), und die Stromnuten (200) auf der oberen Oberfläche und die Stromnuten (200) auf der unteren Oberfläche so angeordnet sind, dass sie abwechselnd positioniert sind, wobei eine Anzahl der Stromnuten (200), eine Tiefe des Seitenwandteils (210) und eine Breite des Bodenteils (220) so eingestellt sind, dass im Vergleich zu einem Fall, in dem die Stromnut nicht ausgebildet ist, ein zulässiger Strom der Sammelschiene um 1 % oder mehr erhöht und eine erzeugte Wärmemenge um 2 % oder mehr gleichzeitig reduziert wird.

2. Sammelschiene (10), die einen Batteriepack bildet, wobei die Sammelschiene umfasst:
eine Basissammelschiene (400) aus einem leitfähigen Körper; und
mindestens vier Stromstäbe (500), die an einer oberen und unteren Oberfläche der Basissammelschiene (400) in einem vorbestimmten Abstand angebracht sind,
wobei die mindestens zwei oder mehr Stromstäbe (500) eine Stromnut zwischen benachbarten anderen Stromstäben (500) bilden,
wobei der Stromstab (500) ein separates Element ist, das mit der Basissammelschiene (400) verbunden ist, um die Stromnut zu bilden,
wobei die Stromnut umfasst:
einen Seitenwandteil (210), der durch eine Dicke des Stromstabs (500) gebildet wird;
und
einen Bodenteil (220), der durch einen Abstand zwischen den Stromstäben (500) gebildet wird,
wobei eine Anzahl der Stromnuten, eine Tiefe des Seitenwandteils (210) und eine Breite des Bodenteils (220) so eingestellt sind, dass ein Oberflächenbereich der gesamten Sammelschiene vergrößert wird, wobei die Breite des Bodenteils (220) kleiner ist als die Tiefe des Seitenwandteils (210).

3. Sammelschiene nach Anspruch 1 oder 2, wobei eine Breite und eine Dicke der Sammelschiene (10) von 25 mm und 4 mm gebildet werden.

4. Sammelschiene nach Anspruch 1, wobei eine Anzahl der Stromnuten (200), eine Tiefe des Seitenwandteils (210) und eine Breite des Bodenteils (220) so eingestellt sind, dass im Vergleich zu einem Fall, in dem die Stromnut nicht ausgebildet ist, ein zulässiger Strom der Sammelschiene um 5 % oder mehr erhöht und eine erzeugte Wärmemenge um 10 % oder mehr gleichzeitig reduziert wird.

5. Sammelschiene nach Anspruch 1, wobei eine Anzahl der Stromnuten (200), eine Tiefe des Seitenwandteils (210) und eine Breite des Bodenteils (220) so eingestellt sind, dass im Vergleich zu einem Fall, in dem die Stromnut nicht ausgebildet ist, ein zulässiger Strom der Sammelschiene um 10 % oder mehr erhöht und eine erzeugte Wärmemenge um 15 % oder mehr gleichzeitig reduziert wird.

6. Sammelschiene nach einem der Ansprüche 3 bis 5, wobei eine Temperaturänderung der Sammelschiene (10) durch die nachstehende Gleichung 1 bestimmt wird,
wobei ein zulässiger Strom der Sammelschiene (10) durch die nachstehende Gleichung 2 bestimmt wird, $\left(θ-{θ}_{n}\right) = \frac{1}{\left\{{S}^{\frac{0 , 5}{0 , 61}}\times {P}^{\frac{0 , 39}{0 , 61}}\right\}}$ $I = {S}^{0 , 5} \times {P}^{0 , 39}$
wobei in Gleichung 1 oder 2 (θ-θₙ) ein Temperaturänderungswert (°C) ist, S eine Querschnittsfläche der Sammelschiene ist und P ein Umfang der Oberfläche des Sammelschienenquerschnitts ist.

7. Sammelschiene nach Anspruch 4, wobei eine Anzahl der Stromnuten (200) fünf beträgt,
wobei eine Tiefe des Seitenwandteils (210) und eine Breite des Bodenteils (220) der Stromnut jeweils 2 mm und 1 mm betragen.

8. Sammelschiene nach Anspruch 5, wobei eine Anzahl der Stromnuten (200) sechs beträgt,
wobei eine Tiefe des Seitenwandteils (210) und eine Breite des Bodenteils (220) der Stromnut jeweils 2 mm und 1 mm betragen.

9. Herstellungsverfahren einer Sammelschiene, die einen Batteriepack bildet, nach Anspruch 1, wobei das Verfahren umfasst:
Bereitstellen eines leitfähigen Sammelschienenkörpers mit einer vorbestimmten Breite und Dicke; und
Bilden mindestens einer Stromnut auf mindestens einer Oberfläche des leitfähigen Sammelschienenkörpers.

10. Herstellungsverfahren einer Sammelschiene, die einen Batteriepack bildet, nach Anspruch 2, wobei das Verfahren umfasst:
Bereitstellen einer Basissammelschiene mit einer vorbestimmten Breite und Dicke;
Bereitstellen eines Stromstabs mit einer vorbestimmten Breite und Dicke; und
Bilden einer Stromnut durch Verbinden des Stromstabs mit der oberen und unteren Oberfläche der Basissammelschiene in einem vorbestimmten Abstand.

## Revendications

1. Barre omnibus (10) constituant un bloc-batterie, la barre omnibus comprenant :
un corps de barre omnibus conducteur (100) et
une pluralité de rainures de courant (200) prévues sur une surface supérieure et une surface inférieure du corps de barre omnibus conducteur (100),
dans laquelle chaque rainure de courant (200) comprend :
des parties de paroi latérale (210) des deux côtés d'une rainure ; et
une partie de fond (220) d'une partie inférieure,
dans laquelle un nombre des rainures de courant (200), une profondeur de la partie de paroi latérale (210), et une largeur de la partie de fond (220) sont définies pour augmenter une aire de surface de la barre omnibus entière (10), dans laquelle la largeur de la partie de fond (220) est inférieure à la profondeur de la partie de paroi latérale (210), et les rainures de courant (200) sur la surface supérieure et les rainures de courant (200) sur la surface inférieure sont agencées pour être positionnées en alternance, dans laquelle un nombre des rainures de courant (200), une profondeur de la partie de paroi latérale (210), et une largeur de la partie de fond (220) sont définies de sorte qu'un courant admissible de la barre omnibus est augmenté de 1 % ou plus et une quantité de chaleur générée est réduite de 2 % ou plus en même temps par rapport à un cas où la rainure de courant n'est pas formée.

2. Barre omnibus (10) constituant un bloc-batterie, la barre omnibus comprenant :
une barre omnibus de base (400) faite d'un corps conducteur ; et
au moins quatre barrettes de courant (500) fixées à une surface supérieure et inférieure de la barre omnibus de base (400) à un intervalle prédéterminé,
dans laquelle les au moins deux barrettes de courant (500) ou plus forment une rainure de courant entre d'autres barrettes de courant adjacentes (500),
dans laquelle la barrette de courant (500) est un élément séparé lié à la barre omnibus de base (400) pour former la rainure de courant,
dans laquelle la rainure de courant comprend :
une partie de paroi latérale (210) formée par une épaisseur de la barrette de courant (500) ; et
une partie de fond (220) formée par un intervalle entre les barrettes de courant (500),
dans laquelle un nombre des rainures de courant, une profondeur de la partie de paroi latérale (210), et une largeur de la partie de fond (220) sont définies pour augmenter une aire de surface de la barre omnibus entière, dans laquelle la largeur de la partie de fond (220) est inférieure à la profondeur de la partie de paroi latérale (210).

3. La barre omnibus selon la revendication 1 ou 2, dans laquelle une largeur et une épaisseur de la barre omnibus (10) sont formées de 25 mm et 4 mm.

4. La barre omnibus selon la revendication 1, dans laquelle un nombre des rainures de courant (200), une profondeur de la partie de paroi latérale (210), et une largeur de la partie de fond (220) sont définies de sorte qu'un courant admissible de la barre omnibus est augmenté de 5 % ou plus et une quantité de chaleur générée est réduite de 10 % ou plus en même temps par rapport à un cas où la rainure de courant n'est pas formée.

5. La barre omnibus selon la revendication 1, dans laquelle un nombre des rainures de courant (200), une profondeur de la partie de paroi latérale (210), et une largeur de la partie de fond (220) sont définies de sorte qu'un courant admissible de la barre omnibus est augmenté de 10 % ou plus et une quantité de chaleur générée est réduite de 15 % ou plus en même temps par rapport à un cas où la rainure de courant n'est pas formée.

6. La barre omnibus selon l'une quelconque des revendications 3 à 5, dans laquelle un changement de température de la barre omnibus (10) est déterminé par l'Équation 1 ci-dessous,
dans laquelle un courant admissible de la barre omnibus (10) est déterminé par l'Équation 2 ci-dessous. $\left(θ-{θ}_{n}\right) = \frac{1}{\left\{{S}^{\frac{0.5}{0.61}}\times {P}^{\frac{0.39}{0.61}}\right\}}$ $I = {S}^{0.5} \times {P}^{0.39}$
dans laquelle dans l'Équation 1 ou 2, (θ-θₙ) est une valeur de changement de température (°C), S est une aire de section transversale de la barre omnibus, et P est une circonférence de la surface de la section transversale de la barre omnibus.

7. La barre omnibus selon la revendication 4, dans laquelle un nombre de la rainure de courant (200) est de cinq,
dans laquelle une profondeur de la partie de paroi latérale (210) et une largeur de la partie de fond (220) de la rainure de courant sont de 2 mm et 1 mm, respectivement.

8. La barre omnibus selon la revendication 5, dans laquelle un nombre de la rainure de courant (200) est de six,
dans laquelle une profondeur de la partie de paroi latérale (210) et une largeur de la partie de fond (220) de la rainure de courant sont de 2 mm et 1 mm, respectivement.

9. Procédé de fabrication d'une barre omnibus constituant un bloc-batterie selon la revendication 1, le procédé comprenant :
la fourniture d'un corps de barre omnibus conducteur ayant une largeur et une épaisseur prédéterminées ; et
la formation d'au moins une rainure de courant sur au moins une surface du corps de barre omnibus conducteur.

10. Procédé de fabrication d'une barre omnibus constituant un bloc-batterie selon la revendication 2, le procédé comprenant :
la fourniture d'une barre omnibus de base ayant une largeur et une épaisseur prédéterminées ;
la fourniture d'une barrette de courant ayant une largeur et une épaisseur prédéterminées ; et
la formation d'une rainure de courant en liant la barrette de courant aux surfaces supérieure et inférieure de la barre omnibus de base à un intervalle prédéterminé.
